Europäisches Patentamt

European Patent Office

Office européen des brevets

(11) Veröffentlichungsnummer: **0 402 342**
**A2**

## (12) EUROPÄISCHE PATENTANMELDUNG

(21) Anmeldenummer: **90890067.3**

(22) Anmeldetag: **09.03.90**

(51) Int. Cl.5: **C03B 33/023**

(30) Priorität: **05.06.89 AT 1366/89**

(43) Veröffentlichungstag der Anmeldung:
**12.12.90 Patentblatt 90/50**

(84) Benannte Vertragsstaaten:
**AT BE CH DE DK ES FR GB GR IT LI LU NL SE**

(71) Anmelder: **Lisec, Peter**
**Bahnhofstrasse 34**
**A-3363 Amstetten-Hausmening(AT)**

(72) Erfinder: **Lisec, Peter**
**Bahnhofstrasse 34**
**A-3363 Amstetten-Hausmening(AT)**

(74) Vertreter: **Beer, Manfred, Dipl.-Ing. et al**
**Lindengasse 8**
**A-1070 Wien(AT)**

(54) **Verfahren und Vorrichtung zum Zerteilen einer Glastafel.**

(57) Zum Zerteilen einer Glastafel (3), die auf einer Seite geritzt ist, wird die Glastafel (3) mit nach unten gekehrter Ritzlinie (10) auf eine ebene und starre Auflagefläche (26) gelegt, und von der der Ritzlinie (10) gegenüberliegenden Seite der Glastafel (3) her im Bereich der Ritzlinie (10) auf die Glastafel Druck ausgeübt. Der Druck wird von einem eine Druckrolle (22) oder Druckkugel aufweisenden Druckwerkzeug (19) ausgeübt. Zusätzlich werden von einem Vibrator (23) auf die Druckrolle (22) oder die Druckkugel auf die Glastafel (3) hin gerichtete Schläge ausgeübt.

Fig. 2

EP 0 402 342 A2

## Verfahren und Vorrichtung zum Zerteilen einer Glastafel

Die Erfindung betrifft ein Verfahren zum Zerteilen einer Glastafel, bei dem man die Glastafel auf einer Seite ritzt und die Glastafel dann entlang der wenigstens einen Ritzlinie bricht.

Beim herkömmlichen Zerteilen einer Glastafel (Glasschneiden) werden die in einer Glasschneidemaschine einseitig geritzten Glastafeln zum "Brechen" gebogen, wobei die Ritzlinie an der Außenseite, d.h. der konkav gekrümmten Seite der Glastafel, liegt und die Glastafel im Bereich der Ritzlinie von unten her angehoben wird. Dieses Anheben erfolgt entweder durch Hebeleisten oder Heberollen in Glasbrechtischen. Das "Brechen" kann auch dadurch erfolgen, daß man die Glastafel über die Kante eines Tisches händisch nach unten abbiegt.

Bei in sich geschlossenen Ritzlinien, wie sie beispielsweise bei Glastafeln mit wenigstens teilweise gekrümmten Umrißlinien vorliegen können, wird der Glastafelzuschnitt aus dem übrigen Teil der Glastafel herausgelöst, indem man entlang der Ritzlinie und von der die Ritzlinie tragenden Seite her auf die Glastafel klopft. Dieses "Klopfen" erfolgt von Hand aus und ist sehr zeitraubend.

Es sind auch schon Verfahren zum Zerteilen von Glastafeln vorgeschlagen worden (DE-AS 1 241 567, US-PS 4 225 072 und SU-PS 874 681), bei welchen die Glastafel auf voneinander einen Abstand aufweisende Auflager so aufgelegt wird, daß die Ritzlinie nach unten weist und zwischen den Auflagern angeordnet ist. Bei diesen Verfahren wird die Glastafel zum "Brechen" zwischen den Auflagern nach unten gebogen.

Die US-PS 3 532 260 zeigt und beschreibt eine Vorrichtung, mit der eine Glasplatte, die auf einer nachgiebigen Stützfläche, z.B. auf einer Gummifläche aufliegt, in einem Arbeitsgang geritzt und geteilt werden soll. Hiezu werden auf die Glasplatte Vibrationen von der Seite her ausgeübt, auf der die Ritzlinie erzeugt wurde.

Problematisch bei den bekannten Verfahren zum Zerteilen von Glastafeln (Brechen von Glastafeln) ist es, daß sich der Bruch, insbesondere wenn die Ritzlinien nicht sauber erzeugt worden sind, verlaufen kann und dann unsaubere Brechkanten mit vorspringenden Glasteilen entstehen können.

Der Erfindung liegt die Aufgabe zugrunde, ein Verfahren der eingangs genannten Gattung anzugeben, das die oben genannten Nachteile nicht aufweist und nach dem Glastafeln sauber geteilt werden können.

Erfindungsgemäß wird diese Aufgabe dadurch gelöst, daß man die Glastafel nach dem Ritzen mit nach unten gekehrter Ritzlinie auf eine Auflagefläche, durch welche die Glastafel wenigstens im Bereich der Ritzlinie flächig abgestützt wird, legt, und daß man von der der Ritzlinie gegenüberliegenden Seite der Glastafel im Bereich der Ritzlinie auf die Glastafel entlang der Ritzlinie fortschreitend Druck ausübt.

Beim erfindungsgemäßen Verfahren wird beispielsweise mit Hilfe einer Druckrolle von der Rückseite, d.h. von der der wenigstens einen Ritzlinie - in der Regel werden mehrere Ritzlinien vorgesehen sein - gegenüberliegenden Seite her Druck auf die Glastafel ausgeübt, wobei die Glastafel während des Ausübens von Druck mit der wenigstens einen Ritzlinie nach unten weisend auf einer im wesentlichen starren, ebenen Auflagefläche (Tisch) aufliegt. Das erfindungsgemäße Verfahren eignet sich ganz besonders auch zum Zerteilen von Glastafeln entlang sogenannter "Traveren".

Vorteilhafte Ausgestaltungen des erfindungsgemäßen Verfahrens sind Gegenstand der Unteransprüche 2 bis 7.

Die Erfindung betrifft weiters eine für das Durchführen des erfindungsgemäßen Verfahrens besonders vorteilhaft verwendbare Vorrichtung mit einem Schneidtisch und wenigstens einer Brücke, an der wenigstens ein Schneidwerkzeug verfahrbar ist, mit dem in der Glastafel die wenigstens eine Ritzline erzeugt wird.

Diese Vorrichtung zur Durchführung des erfindungsgemäßen Verfahrens ist dadurch gekennzeichnet, daß eine an sich bekannte Vorrichtung zum Wenden der geritzten Glastafel und zum Auflegen der gewendeten Glastafel auf eine ebene Unterlage, durch welche die Glastafel wenigstens im Bereich der Ritzlinie flächig abgestützt wird, vorgesehen ist und daß eine entlang der Unterlage verfahrbare Brücke mit einem entlang dieser verfahrbaren Werkzeug zum Ausüben von Druck auf die der Ritzlinie gegenüberliegende Seite der Glastafel vorgesehen ist.

Vorteilhafte Ausgestaltungen der erfindungsgemäßen Vorrichtung sind Gegenstand der Unteransprüche 8 bis 11.

Bei Anwendung des erfindungsgemäßen Verfahrens, insbesondere bei Verwendung der erfindungsgemäßen Vorrichtung, werden saubere Bruchkanten erzielt, wobei das saubere Brechen insbesondere bei dickeren Glastafeln vorteilhaft beeinflußt wird, wenn der Druck, der z.B. mit einer Druckrolle auf die Glastafel ausgeübt wird, von Schlägen gegen die Glastafel begleitet wird. Die Frequenz der Schläge richtet sich nach der Geschwindigkeit, mit der das den Druck ausübende Werkzeug entlang der Ritzlinie bewegt wird, wobei die Frequenz so gewählt bzw. eingestellt werden kann, daß je Längeneinheit bei jeder Geschwindigkeit eine vorgegebene Anzahl von Schlägen gegen die der Ritzlinie gegenüberliegende Seite der Glastafel ausgeübt wird.

Weitere Einzelheiten, Merkmale und Vorteile der Erfindung ergeben sich aus der nachstehenden Beschreibung, in der auf die angeschlossene Zeichnung Bezug genommen wird. Es zeigt

Fig. 1 in Seitenansicht schematisch eine Vorrichtung zur Durchführung des erfindungsgemäßen Verfahrens und

Fig. 2 eine Einzelheit des Werkzeuges, mit dem Druck und Schläge auf eine Glastafel ausgeübt werden können.

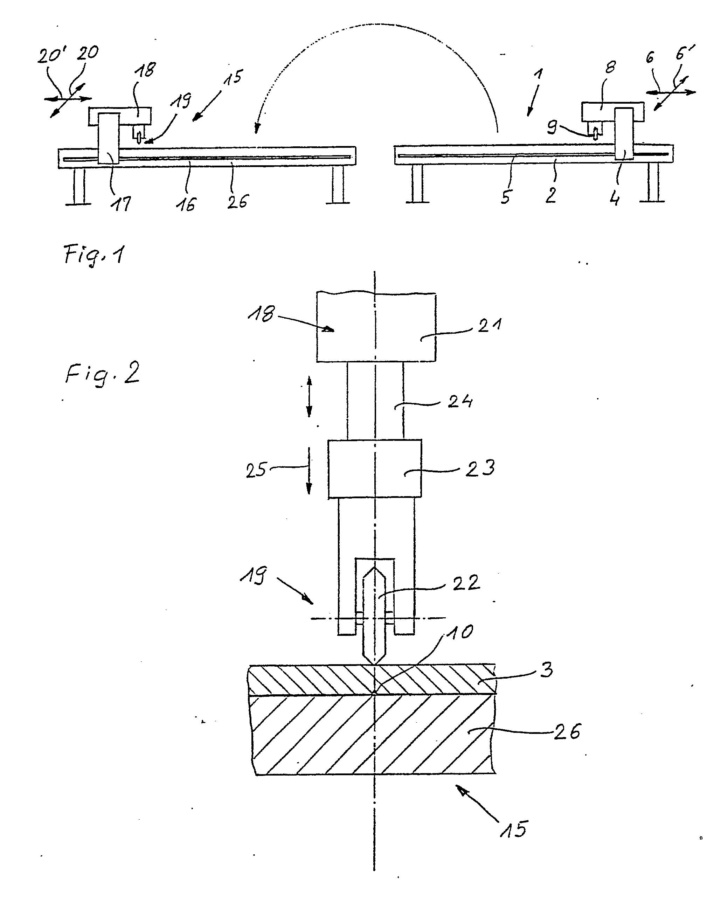

Die in Fig. 1 gezeigte Vorrichtung besitzt einen Schneidtisch 1, der eine beliebige, beispielsweise auch eine bekannte Bauart haben kann (vgl. z.B. EP-A- 0 192 920). Der Schneidtisch 1 besitzt eine Platte 2, auf der die zu ritzende Glastafel 3 aufgelegt wird. Die Platte 2 kann, wie dies bei Glasschneidtischen üblich ist, mit Förderbändern zum An- und Abtransport der Glastafel 3 ausgestattet sein oder sie ist als Luftkissentisch ausgebildet bzw. weist die aus der EP-A-0 192 920 bekannten Mitnehmer auf.

Der Schneidtisch 1 besitzt weiters eine Schneidbrücke 4, die über Führungen 5 durch nicht gezeigte Antriebe in Richtung des Doppelpfeiles 6, d.h. in der Richtung der Längserstreckung des Schneidtisches 1, verfahrbar ist.

An der Schneidbrücke 4 ist quer zur Richtung der Längserstreckung des Schneidtisches 1 auf einer Führung durch einen nicht gezeigten Antrieb verfahrbar ein Schneidkopf 8 vorgesehen, der ein heb- und senk- sowie verschwenkbares Werkzeug 9 besitzt. Mit dém Werkzeug 9 können in der Glastafel 3 nach einem vorgegebenen Programm Kerbritzungen (Ritzlinien) 10 erzeugt werden.

Neben dem Schneidtisch 1 ist ein weiterer Tisch 15 vorgesehen, der an seinen beiden Längsseiten Führungen 16 besitzt, auf welchen eine sich quer zur Längserstreckung des Tisches 15 erstreckende Brücke 17 durch nicht gezeigte Antriebe in Richtung des Pfeiles 20' verfahrbar ist. Auf der Brücke 17 ist ein Schlitten 18 in Richtung des Doppelpfeiles 20 durch einen nicht gezeigten Antrieb auf nicht gezeigten Führungen verschiebbar; so daß jeder Punkt des Tisches 15 bestrichen werden kann.

Am Schlitten 18 ist ein Druckwerkzeug 19 vorgesehen, das von einem Antrieb, z.B. einem Druckmittelzylinder 21 (Fig. 2) gegen eine Glastafel 3 gedrückt werden kann.

Das Druckwerkzeug 19 besitzt im in Fig. 2 gezeigten Ausführungsbeispiel eine Druckrolle 22, die unter Zwischenschaltung eines Vibrators 23 mit der Kolbenstange 24 des Druckmittelzylinders 21 des Druckwerkzeuges 19 verbunden ist.

Der Vibrator 23 kann ein mechanischer Vibrator, ein Vibrator, der auf Grund von Magnetostriktion arbeitet, oder ein sonstiger Vibrator sein, der in der Lage ist, auf die Druckrolle 22 nach unten gerichtete Schläge (Pfeil 25) ausüben, während die Druckrolle 22 vom Druckmittelzylinder 21 gegen die Glastafel 3 gedrückt wird.

Die soeben beschriebene Vorrichtung arbeitet wie folgt:

Zunächst wird auf die Platte 2 des Schneidtisches 1 eine Glastafel 3 aufgelegt und in der Oberseite der Glastafel 3 mit Hilfe des Schneidwerkzeuges 9 nach dem vorgegebenen Programm, das auf die Größe der Glastafel und die herzustellenden Teile der Glastafel (Zuschnitte) Rücksicht nimmt, Ritzlinien 10 erzeugt.

Nachdem alle gewünschten Ritzlinien 10 erzeugt worden sind, wird die Glastafel 3 so auf die Platte 26 des Tisches 15 aufgelegt, daß die Ritzlinien 10, wie dies in Fig. 2 angedeutet ist, auf der nach unten weisenden Seite der Glastafel 3 liegen.

Hiezu bestehen verschiedene Möglichkeiten. So kann die Platte 26 oder die Platte 2 kippbar sein, so daß entweder die Platte 26 eine auf der Platte 2 des Schneidtisches 1 liegende Glastafel 3, die Ritzlinien 10 aufweist, übernimmt, oder die Platte 2 des Glasschneidtisches 1 verschwenkt und eine Glastafel 3 auf die Platte 26 der Vorrichtung 15 ablegt. Auch eine Kombination von zwei verschwenkbaren Platten 2 und 26 ist möglich, wobei die Platten 2 und 26 aus ihrer waagerechten Lage zur Übergabe einer Glastafel 3 bis in eine etwa vertikale Lage hochgeschwenkt werden.

Bei diesen Ausführungsformen empfiehlt es sich, zum Festhalten der Glastafel 3 an der Platte 2 des Schneidtisches 1 bzw. der Platte 26 des Tisches 15 Unterdruckeinrichtungen vorzusehen, welche die Glastafel 3 an der Platte 2 bzw. 26 festsaugen. Beispielsweise können bei als Luftkissentischen ausgebildeten Platten 2 bzw. 26 die Austrittsöffnungen für Druckluft mit Unterdruck beaufschlagt werden, so daß eine Glastafel 3 an der Platte 2 bzw. 26 festgesaugt wird.

Es ist aber auch eine Ausführungsform denkbar, bei der ein gesonderter Umlegetisch eine Glastafel 3 vom Glasschneidtisch 1 übernimmt und mit nach unten gekehrten Ritzlinien 10 auf die Platte 26 des Tisches 15 auflegt.

Sobald eine Glastafel 3 mit nach unten weisenden Ritzlinien 10 auf der Platte 26 des Brechtisches 15 liegt, wird das Druckwerkzeug 19 entlang der Ritzlinien 10 bewegt, wobei es gleichzeitig vom Druckzylinder 21 mit einer der Dicke der Glastafel 3 entsprechenden Kraft (dickere Glastafeln erfordern einen höheren Druck) gegen die den Ritzlinien 10 gegenüberliegende Fläche der Glastafel 3 gedrückt wird. Zusätzlich werden auf die Druckrolle vom Vibrator 23 in Richtung des Pfeiles 25, d.h. nach unten gerichtete Schläge ausgeübt, so daß das Zerteilen der Glastafeln ("Brechen" unter Ausbildung von von den Ritzlinien 10 ausgehenden Bruchlinien) unterstützt wird.

Die Steuerung der Antriebe für die Bewegungen des Druckwerkzeuges 19 in Richtung der Doppelpfeile 20 bzw. 20' kann auf Grund der in der Glasschneidmaschine 1 gespeicherten Daten für die Steuerung des Schneidwerkzeuges 9 erfolgen. Dabei ist allerdings darauf Rücksicht zu nehmen, daß bei geraden Ritzlinien nach Möglichkeit und bevorzugt nur im Bereich solcher Ritzlinien 10 Druck auf die Glastafel 3 ausgeübt wird, die sich von Rand zu Rand der zu teilenden Glastafel oder von Teilstücken derselben erstrecken. Es besteht nämlich die Gefahr, daß eine Bruchlinie, die durch Druck auf die Glastafel im Bereich einer Ritzlinie erzeugt wird, über eine senkrecht dazu verlaufende Ritzlinie hinaus läuft und so dort eine Bruchlinie erzeugt wird, wo sie nicht benötigt wird.

Das erfindungsgemäße Verfahren und die erfindungsgemäße Vorrichtung eignet sich auch zum Herstellen von Glastafelzuschnitten mit wenigstens teilweise gekrümmten oder sonst unregelmäßigen, von einem Rechteck abweichenden Umrißformen. So ist es möglich, das Druckwerkzeug 19 entlang einer geschlossenen Linie zu bewegen und so beispielsweise kreisrunde Zuschnitte oder Zuschnitte mit abgerundeten Ecken zu erzeugen.

Die Geschwindigkeit, mit der sich das Druckwerkzeug 19 entlang der Ritzlinien 10 über die den Ritzlinien 10 gegenüberliegende Fläche der Glastafel 3 bewegt, ist bei dickeren Glastafeln kleiner als bei dünnen Glastafeln und kann bis zu 100 m/min betragen und sollte in jedem Fall höher sein als die Geschwindigkeit, mit der das Schneidwerkzeug 9 des Glasschneidtisches 1 bewegt wird, um dem oben geschilderten Umstand Rechnung zu tragen, der es vorteilhaft macht, stets von Rand zu Rand der Glastafel (oder bereits hergestellten Teilstücken derselben) verlaufende Bruchlinien abzufahren.

Die Frequenz der vom Vibrator 23 auf die Druckrolle 22 ausgeübten Schläge richtet sich nach der Bewegungsgeschwindigkeit des Druckwerkzeuges 19 und wird so abgestimmt, daß je Längeneinheit der vom Druckwerkzeug 19 zurückgelegten Strecke eine konstante Anzahl von Schlägen ausgeübt wird.

An Stelle der Druckrolle 22 in Fig. 2, die es erforderlich macht, daß das Werkzeug 19 am Schlitten 18 verschwenkbar gelagert ist, kann auch eine Kugel vorgesehen sein, durch die so wie mit der Druckrolle 22 punktförmig Druck auf die der oder den Ritzlinien 10 gegenüberliegende Fläche der Glastafel 3 ausgeübt werden kann.

**Ansprüche**

1. Verfahren zum Zerteilen einer Glastafel, bei dem man die Glastafel auf einer Seite ritzt und die Glastafel dann entlang der wenigstens einen Ritzlinie bricht, dadurch gekennzeichnet, daß man die Glastafel nach dem Ritzen mit nach unten gekehrter Ritzlinie auf eine Auflagefläche, durch welche die Glastafel wenigstens im Bereich der Ritzlinie flächig abgestützt wird, legt, und daß man von der der Ritzlinie gegenüberliegenden Seite der Glastafel im Bereich der Ritzlinie auf die Glastafel entlang der Ritzlinie fortschreitend Druck ausübt.

2. Verfahren nach Anspruch 1, dadurch gekennzeichnet, daß man auf die Glastafel im Bereich der Ritzlinie zusätzlich zu dem auf die Glastafel ausgeübten Druck Schläge ausübt.

3. Verfahren nach Anspruch 1 oder 2, dadurch gekennzeichnet, daß man Druck punktförmig ausübt.

4. Verfahren nach einem der Ansprüche 1 bis 3, dadurch gekennzeichnet, daß man die Größe des Drucks entsprechend der Dicke der zu zerteilenden Glastafel wählt und bei einer dickeren Glastafel gegenüber dem bei einer dünneren Glastafel angewendeten Druck erhöht ist.

5. Verfahren nach einem der Ansprüche 1 bis 4, dadurch gekennzeichnet, daß die Schläge mit einer der Bewegungsgeschwindigkeit angepaßten Frequenz ausgeübt werden, so daß je Längeneinheit der Ritzlinie eine im wesentlichen konstante Zahl von Schlägen ausgeübt wird.

6. Verfahren nach einem der Ansprüche 1 bis 5, dadurch gekennzeichnet, daß man den Druck auf die der Ritz linie gegenüberliegende Seite der Glastafel entlang einer Ritzlinie über die Glastafel von einem Rand bis zum gegenüberliegenden Rand der Glastafel fortschreitend ausübt.

7. Verfahren nach einem der Ansprüche 1 bis 6, dadurch gekennzeichnet, daß man den Druck auf der einer in sich geschlossenen Ritzlinie gegenüberliegenden Seite der Glastafel entlang dieser Ritzlinie fortschreitend ausübt.

8. Vorrichtung zur Durchführung des Verfahrens nach einem der Ansprüche 1 bis 7, mit einem Schneidtisch (1) und wenigstens einer Brücke (4), an der wenigstens ein Schneidwerkzeug (9) verfahrbar ist, mit dem in der Glastafel (3) die wenigstens eine Ritzlinie (10) erzeugt wird, dadurch gekennzeichnet, daß eine an sich bekannte Vorrichtung zum Wenden der geritzten Glastafel (3) und zum Auflegen der gewendeten Glastafel (3) auf eine ebene Unterlage (26), durch welche die Glastafel wenigstens im Bereich der Ritzlinie flächig abgestützt wird, vorgesehen ist und daß eine entlang der Unterlage (26) verfahrbare Brücke (17) mit einem entlang dieser verfahrbaren Werkzeug (19) zum Ausüben von Druck und von Schlägen auf die der Ritzlinie (10) gegenüberliegenden Seite der Glastafel (3) vorgesehen ist.

9. Vorrichtung nach Anspruch 8, dadurch gekennzeichnet, daß das Werkzeug (19) zum Ausüben von Druck eine an die Glastafel (3) anlegbare Druckrolle (22) oder -kugel besitzt.

10. Vorrichtung nach Anspruch 8 oder 9, dadurch gekennzeichnet, daß mit dem Werkzeug eine Vorrichtung (23) zum Erzeugen von gegen die Glastafel (3) gerichteten Schlägen, z.B. ein Vibrator, verbunden ist.

11. Vorrichtung nach einem der Ansprüche 8 bis 10, dadurch gekennzeichnet, daß die Steuerung der Bewegungen des Werkzeuges (19) auf Grund der in der Glasschneidevorrichtung (1) gespeicherten Daten für die Anordnung und Lage der Ritzlinien (10) erfolgt.

20' 20   18   19   15   1   8   6  6'

17   16   26   5   2   4

Fig. 1

Fig. 2

18   21

24

25   23

19   22

10   3

26

15